**Europäisches Patentamt**

**European Patent Office**

**Office européen des brevets**

(19)

(11) Publication number: **0 016 270**
**A1**

## EUROPEAN PATENT APPLICATION

(12)

(21) Application number: **79300464.9**

(22) Date of filing: **23.03.79**

(51) Int. Cl.³: **F 16 C 11/10**
**B 63 H 16/06, F 16 B 9/00**
**F 16 C 23/10**

(43) Date of publication of application:
**01.10.80 Bulletin 80/20**

(84) Designated Contracting States:
**CH DE FR IT NL SE**

(71) Applicant: **Douglas, Carl**
**Kanalia Wildwood Close Pyrford**
**Woking Surrey GU22 8PL(GB)**

(72) Inventor: **Douglas, Carl**
**Kanalia Wildwood Close Pyrford**
**Woking Surrey GU22 8PL(GB)**

(74) Representative: **Dixon, Donald Cossar et al,**
**Gee & Co. Chancery House Chancery Lane**
**London WC2 1QU(GB)**

(54) **Attitude setting devices.**

(57) An attitude setting device for setting the attitude of a mounted member (10), e.g. a thole pin, adjustably mounted on a base member (11) comprises a first setting element (12) and a second setting element (13) arranged for rotation about mutually-inclined axes. Relative rotation of the tapered washer-type elements (12,13) varies the inclination, and co-rotation the orientation, of the member (10) which can then be locked in a desired attitude by a locking means (16). Alternatively the setting elements are arranged for symmetrical contra-rotation so as to alter only the inclination of the member (10); alterable orientation is achieved by providing a further pair of setting elements. Equivalent setting elements disclosed are skewed bushes and skewed sleeves.

In further embodiments the setting elements are co-axially mounted, eccentrically-bored bushes surrounded by an internally cylindrical mounted member; and circumferentially and eccentrically-mounted rotatable bushes through which the mounted member passes.

FIG. 1

Attitude Setting Devices

This invention relates to setting devices for setting
the attitude, i.e. the inclination and/or orientation,
of a mounted member adjustably mounted on a base
member.

Many ways of varying the inclination and orientation of
an adjustably mounted member are known; for example,
the member may be fixed relatively to one member of a
ball-and-socket and thus be variably inclinable and
orientable relatively to the other member of the ball-
and-socket. Alternatively a device of the gimbal type
may be employed. Such known arrangements however
suffer from various disadvantages amongst which may be
mentioned the difficulty of locking the adjustable
member in a predetermined inclination and orientation
and the difficulty of accurately inclining or orientating
the member in a desired predetermined position when
employing a principle based on independent adjustment
about mutually-perpendicular axes.

According to the present invention there is provided a
setting device for setting the attitude of a mounted
member adjustably mounted on a base member, the device
comprising a first setting element arranged for rotation
with respect to the base member and a second setting
element arranged for rotation with respect to the first
element, the elements being rotatable about respective
mutually-inclined axes or eccentrically mounted, and
the arrangement being such that relative rotation of the
elements varies the inclination of the mounted member.
A setting device according to the present invention is
usually incorporated into an adjustable mounting.

- 2 -

Preferably the pair of setting elements are a pair of co-operating wedges capable of combined rotation about one axis and of independent relative rotation about another axis passing therethrough and inclined to said one axis. The wedge angles of the wedges may be the same or different: assuming that each wedge angle is $\alpha/2^\circ$, then the inclination of an axis defined by the mounted member can be varied from $0^\circ$ to $\pm \alpha^\circ$ by a combination of rotation and relative rotation of the pair of wedges.

In a modification of the embodiment employing wedges the setting elements comprise a pair of skewed bushes provided with abutting tapered flanges. Alternatively, a pair of sleeves may be employed, one within the other, the bore or each sleeve being skew to its external cylindrical surface so that rotation of the sleeves and relative rotation thereof will vary the inclination and the orientation of the axis defined by the outer cylindrical surface of the outer sleeve.

According to another embodiment of the present invention said elements are constituted by first and second eccentric bushes or like members through which the mounted member passes, the bushes each being rotatable relative to the mounting and to each other, and further mounting means for the mounted member are provided at the point of intersection of the angle of the mounted member in a reference position and in a position inclined thereto. Means may be provided for locking the bushes relative to each other and to said mounting. Preferably the second bush surrounds the first but it may be solid with the mounted member, provided that the latter is rotatable.

According to yet another embodiment of the invention the elements are eccentrically mounted and comprise a pair of eccentrically bored sleeves each surrounded by bearings carried by the mounted member, relative rotation or rotation of the sleeves causing the inclination and/or orientation of the axis of the mounted member to vary.

The device of this invention may be readily calibrated both to predetermine the positions of the setting elements relative to each other and to predetermine the position of the pair of setting elements relatively to an external reference point such as, for example, a base plate.

Locking means are preferably provided to lock the pair of setting elements both relatively to each and relatively to an external reference point. Although any suitable locking means may be employed such as, for example, one or more locking pins passing through aligned apertures in the setting elements, it is preferred that the setting elements be so mounted that they can be clamped together and to an external member such as a base plate. In particular, it is preferred that a form of ball-and-socket locking construction be employed in which a ball member attached to one of the setting elements can be lockingly urged into a socket member in the other setting element and/or in an external member such as a base plate.

The device of this invention may be made of any suitable material such as, for example, stainless steel, mild steel, brass, aluminium alloy, reinforced plastics materials, titanium alloy or carbon fibre composite.

Clearly, the applications of the setting device of this invention are manifold since it may be employed in any situation where the orientation and/or inclination of an

- 4 -

axis of a mounted member is required to be varied. In particular the device may comprise or form part of the axle of a wheel, e.g. a steering or suspension axle of a motor vehicle; the axle of a rotor, e.g. of a helicopter or of a marine propeller; a mounting for an instrument, e.g. a telescope, theodolite or the like; a mounting for setting a drilling, milling or grinding axis of a machine tool, e.g. a tool holder for a machine tool; or a thole pin or rowlock for a rowing boat. One of the above-mentioned applications of the setting device of the invention, besides that to thole pins, which is of particular importance, is that to the steering systems of land vehicles. The geometry of conventional steering systems inevitably represents a compromise. However, a system employing devices according to the invention in conjunction with sensors and a servo system can be mechanically or electrically programmed to give the best steering geometry at all times, even for multi-wheel steering.

It will be understood that these applications are given by way of example only and it will be further understood that the invention embraces any apparatus, vehicle or machine incorporating a device in accordance with the present invention.

Embodiments of the device of this invention as incorporated into adjustable mountings will now be described, by way of example only, with reference to the accompanying drawings in which:

Figure 1 is a side elevation, partly in section, of an adjustable mounting according to the invention;
Figure 2 is an end elevation, also partly in section, of the mounting of Figure 1;
Figure 3 is a plan of the mounting of Figures 1 and 2;

Figure 4 is an exploded perspective view of a mounting according to the invention for altering the inclination of a thole pin;

Figure 5 is an elevation of the thole pin partly shown in Figure 4;

Figure 6 is a section on the line VI-VI of Figure 5;

Figure 7 is a section on the line VII-VII of Figure 5;

Figure 8 is a plan of a tapered washer shown in Figure 5;

Figure 9 is an elevation of the washer of Figure 8;

Figure 10 is a plan of a plate shown in Figure 5;

Figure 11 is an elevation of the plate of Figure 10;

Figures 12 to 15 are each a view, similar to that of Figure 1, showing further embodiments of adjustable mountings according to the invention.

In the ensuing description, the same reference numbers are employed to denote the same or similar parts.

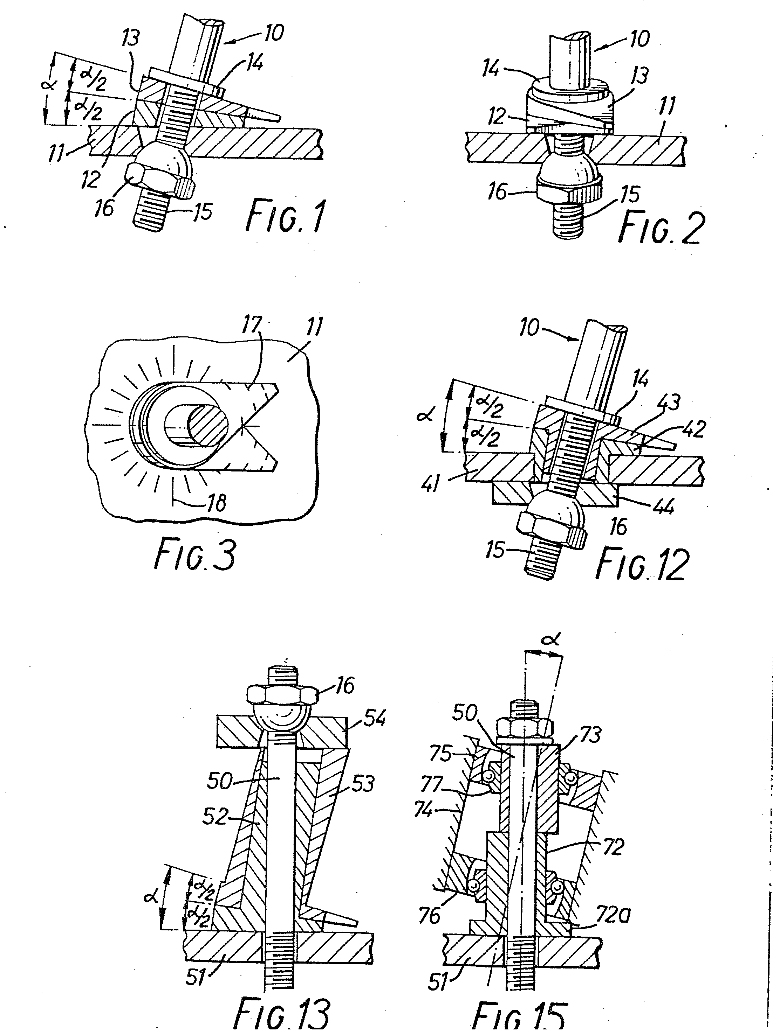

The adjustable mounting shown in Figures 1 to 3 is a device for setting and locking a pin 10 in a desired attitude in relation to a base plate 11 and comprises a pair of two co-operating independently rotatable wedges or tapered washers 12, 13 each having a triangular extension and each being provided with an aperture through which freely passes the pin 10 which is provided with a flange 14 bearing against the upper surface of the wedge 13. The lower end of the pin 10 is threaded as at 15 and passes through an aperture in the base plate 11, the underside of which is countersunk to accommodate a domed locking nut 16 received in the threaded portion 15 of the pin 10.

As may be seen from Figure 3 the upper surfaces of the triangular extensions of the wedges 12, 13 are provided with arcuate markings 17 for calibrating the inclination of the axis of the pin 10 and the visible upper surface of the base plate 11 is provided with radial markings 18 for calibrating the orientation of the pin axis.

The principle underlying this embodiment will readily be appreciated from Figures 1 to 3. With the nut 16 slackened off the wedges 12, 13 are free to rotate. As the upper wedge 13 having a wedge angle of $\alpha/2^o$ between its upper and lower surfaces is rotated relative to the lower edge 12 (wedge angle also $\alpha/2^o$), the combined wedge angle will vary from $0^o$ to $\alpha^o$ and cause the angle of the flange 14 to alter correspondingly, hence the inclination of the axis of the pin 10 to the vertical will vary from $0^o$ to $\alpha^o$. The angle of inclination is set by reading off the markings 17 on the wedge 12 against those on the wedge 13.

The orientation of the pin axis is determined by the direction of a line passing through the axis and the point of intersection or overlap of the two wedges 12, 13 (Figure 3). By rotation of the pair of wedges 12, 13 relatively to the base plate 11 the orientation of the pin axis may be varied, the degree of orientation being read off by the position of the point of intersection against the markings 18. By virtue of the variable orientation the total possible variation in the inclination of the pin axis is $\pm \alpha^o$ to the vertical.

After the pin 10 has been set at the desired attitude the nut 16 is tightened to clamp the wedges 12, 13 and the base plate 11 axially against the flange 14.

The upper wedge 13 may be integral with the pin 10 in which case it is necessary that the pin 10 be rotatable about its axis.

The wedges 12, 13 may be located on the underside of the base plate 11 in which case alternative locking means may be required. For example the flange 14 of the pin 10 may be provided with a convex lower surface to cooperate with a countersunk upper surface of the base plate 11.

This embodiment of Figures 1 to 3 is particularly suitable for incorporation in a rowlock of a racing rowing boat in which case the pin 10 constitutes a thole pin for supporting the oar. For such an application the variation in inclination required is typically $0^{\circ}$ to $15^{\circ}$ together with an ability to vary the orientation in any direction.

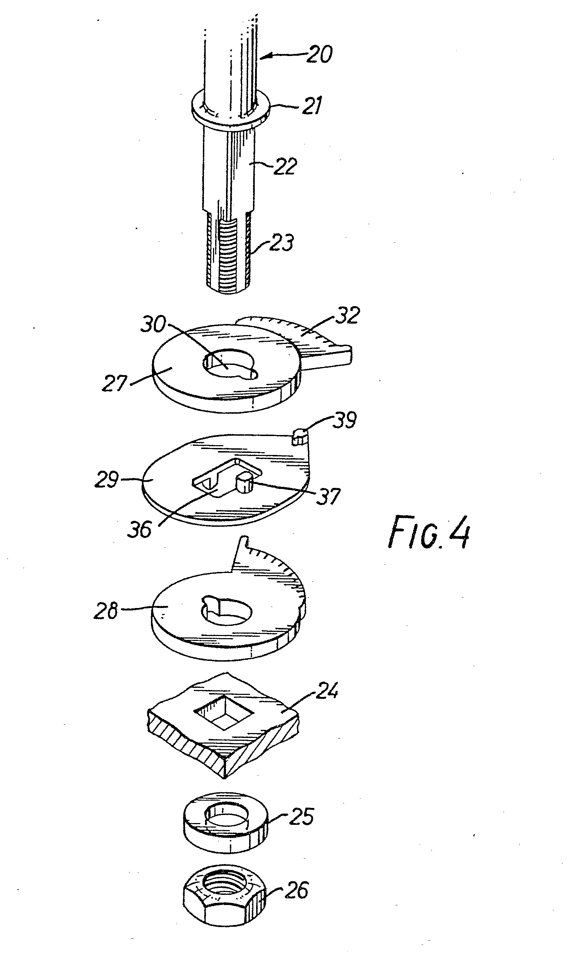

Figures 4 to 11 show an adjustable mounting for altering the pitch of a thole pin 20 in a fixed pitching direction.

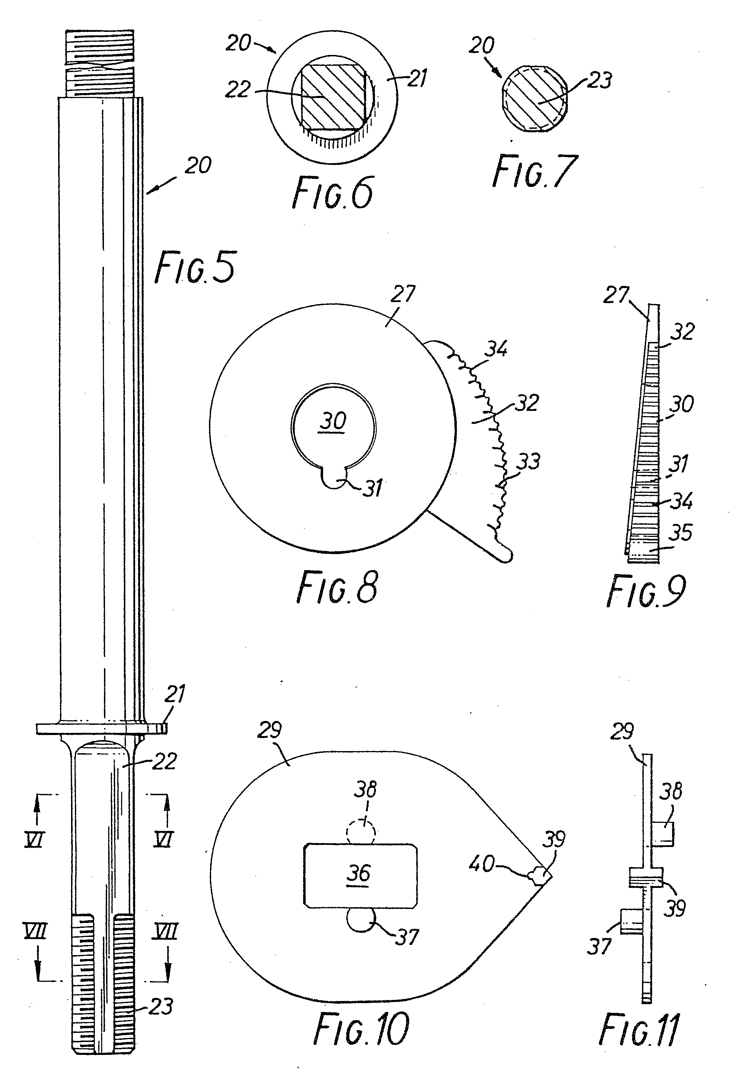

As shown in Figures 4 and 5 the thole pin 20 is provided at its lower end with a flange 21 beyond which projects a square shank 22, terminating in a threaded portion 23, the shank 22 being freely received in a corresponding aperture in a supporting plate 24 secured to the hull of a racing rowing boat in a conventional manner. A washer 25 and locking nut 26 having co-operating spherical surfaces are received in the threaded portion 23. The upper end portion of the pin 20 is threaded in the normal way.

Positioned between the plate 24 and the flange 21 are a pair of pitch washers 27 and 28 and an interposed slide plate 29.

The pitch washer 29 (See Figures 8 and 9) has an upper

- 8 -

surface, which is inclined to its lower surface, and a circular central aperture 30 formed with a lobe 31. A scale plate 32 extends from one side of the washer 29 and is calibrated at 6° intervals with engraved radial lines 33. The outer arcuate edge 34 is scalloped and terminates at one end in a radial projection 35. The washer 28 is of similar form but in reversed position with the scale plate 32 consequently engraved on the other side from that of the washer 27.

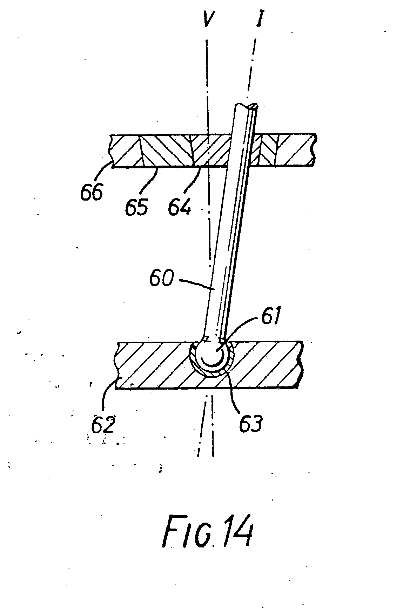

The slide plate 29 (See Figures 10 and 11) has a rectangular central aperture 36 of a shorter dimension such that it is a close fit on the corresponding flats of the shank 22. Flanking the aperture 36 are a pin 37 extending upwardly into the lobe 31 of the washer 27 and a pin 38 extending downwardly into the lobe 31 of the washer 28. At the apex of its pointed end the plate 29 has a pointer 39 having an inwardly facing pip 40.

To adjust the pitch of the thole pin 20 the nut 26 is slackened off and one of the pitch washers 27 and 28 rotated. The projections 35, besides providing suitable finger holds, also act to limit the rotation of the washers by abutment with the pointer 39. This movement of, say, the washer 27, causes sliding movement of the slide plate 29 by the camming action of the pin 37 in the lobe 31 and consequent counter-rotation, by a similar action, through an equal angle of the washer 28. The degree of relative rotation between the washers 27 and 28 will alter the inclination of the lower surface of the washer 28 to the upper surface of the washer 27 in the manner described in relation to Figures 1 to 3 and hence the attitude imparted to the flange 21, and consequently the pin 20, with respect to the supporting plate 24. The angle of pitch thus imparted to the pin 20 can be read directly from the position of the
pointer 39 against the scale 33 on the upper washer
27 and the engagement of the pip 40 in one of the
indentations on each of the scalloped edges 34 prevents
inadvertent alteration of the setting before the nut 26
can be tightened to lock the pin 20 in the desired
inclination.

The mounting described above enables the pitch of the
thole pin 20 to be varied only in a fixed pitching
direction.

To enable the thole pin 20 to be adjusted to any desired
attitude, that is to obtain variation in both the
inclination and orientation of the pin 20, a further
pair of washers 27 and 28 and an interposed slide plate
29 may be employed, acting in a direction at right
angles to the direction of the described embodiment.

By use of the two sets of tapered washers the attitude
of the pin may be set by Cartesian co-ordinates which
may make for simpler setting and therefore readier
consumer acceptance that is possible than with setting
based on polar co-ordinates as employed in the embodiment
of Figures 1 to 3.

Other means of engaging the plate 29 with the washers
27 and 28 may be employed, for example co-operating teeth.

Figure 12 shows a modification of the mounting of Figures
1 to 3 in which there is employed a cylindrical apertured
base plate 51 and, instead of the wedges 12, 13, there
are employed skewed bushes 42, 43, the lower bush 42
being rotatable with respect to an axis as defined by the
base plate 11 and the upper bush 43 being rotatable about the pin 10 passing therethrough. As the nut 16 cannot act directly on the base plate 11 an apertured and countersunk moveable plate 44 is interposed. It will be appreciated that the embodiment of Figure 12 avoids the necessity for clearance between the pin 10 and the apertures of the washers 12, 13 and for free movement of the pin 10 within the base plate 11 as is necessary in the embodiment of Figures 1 to 3.

It is to be noted moreover that the upper skewed bush 43 may be integral with the pin 10. Any other suitable locking means may be employed instead of that shown in Figure 12.

Figure 13 shows a further embodiment of an adjustable mounting according to this invention in which a pin 50 remains perpendicular to the base plate 51 into which it is screwed and does not undergo a variation in inclination and/or orientation.

Mounted for rotation on the pin 50 is an inner skewed sleeve 52 having the axis of its outer cylindrical surface inclined to that of its inner cylindrical surface. Rotatably mounted on the inner sleeve 52 is an outer skewed sleeve 53 again having an outer cylindrical surface inclined to that of its inner surface. Locking is by means of a nut 16 received on the upper threaded end of the pin 50 and a co-operating plate 54 engaging the upper end free of the sleeve 53. The inner sleeve 52 may be integral with the pin 50, in which case the pin 50 should be capable of rotation about its axis. In this embodiment it is of course the outer skewed sleeve 53 which is capable of variation in inclination and/or orientation.

In the embodiment of Figure 14 a pin 60 is formed with a terminal ball 61 received in a socket formed in a base plate 62 and having a bearing layer 63. A ball-and-
socket joint is thus formed at the point of intersection
of a vertical reference position of the pins indicated
by the line V and an inclined position indicated by
the line I. The pin 60 passes through an inner
eccentric bush 64 which is rotatable within an outer
eccentric bush 65 which is in itself rotatably mounted
in an upper mounting plate 66. The geometry of the
internal frusto-conical face of the outer bush 65, of
its external frusto-conical face, and of the respective
co-operating faces of the inner bush 64 and of the mounting
plate 66 is such that, by rotation of the inner bush 64
relative to the outer bush 65, there may be achieved
a desired inclination of the pin 60 to the line V which
passes through the axis of rotation of the outer bush
65; and that by rotation of the outer bush 65 relative
to the mounting plate 66 a desired orientation of the
pin 60 may be achieved.

Locking means (not shown) are provided to enable the
positions of the bushes 64 and 65 to be fixed relative
to the upper plate 66 once the desired attitude of the
pin 60 has been achieved.

Finally, Figure 15 shows an adjustable mounting according
to this invention in which a pair of rotatable sleeves
72, 73 are employed each having an eccentric bore through
which passes the pin 70; in contrast to the previously-
described embodiments in which the rotatable elements
rotate about respective mutually-inclined axes, the
sleeves 72, 73 rotate about a common axis. The adjustable member is constituted by a sleeve 74 in the bore of
which are mounted two ball races 75, 76 having spherical
bearings 77 engaging the sleeves 72, 73. An attitude
defined jointly by the sleeves 72, 73 is thus imparted
to the sleeve 74 which is supported by the flange 72a of

0016270

- 12 -

the lower sleeve. The sleeves 72, 73 may be replaced by eccentric spherical or part-spherical sleeves or other eccentrically-mounted components. It should be noted additionally that one of the upper and lower sleeves 72, 73 may be formed integrally with the pin 50 in which case the pin should be capable of rotation about its axis. Locking is effected by means of a standard nut 78 received on the end of the pin 50 partly through the washer 79.

The calibration of a device according to this invention may be such that the angle of inclination and direction of orientation of the mounted member may be set by direct observation of a pointer against calibration marks, e.g. by means of marks calibrated in degrees of inclination, or alternatively the attitide of the mounted member read off directly. Except in special cases, such as the embodiment of Figures 4 to 11, the attitude of the mounted member is defined in terms of polar, and not Cartesian, co-ordinates, which is often a more useful form of indication.

The present invention is thus capable of providing a cheap, highly compact and reliable device by means of which an axis can be inclined at any angle between $0^{\circ}$ and $90^{\circ}$ and orientation of an axis can be simply and accurately adjusted to a predetermined position, even under load, and then rigidly fixed in that position for as long as required.

- 1 -

Claims:

1.  A setting device for setting the attitude of a
mounted member (10, 20) adjustably mounted on a base
member (11,24), the device comprising a first setting
element (12,27) arranged for rotation with respect to
the base member (11,24) and a second setting element
(13,28) arranged for rotation with respect to the first
element (12,27), characterised in
that the first setting element (12,27) and the second
setting element (13,28) are rotatable about respective
mutually-inclined axes, or eccentrically mounted; the
arrangement being such that relative rotation of the
elements (12, 27 and 13,28) varies the inclination of
the mounted member (10,20).

2.  A device as claimed in Claim 1, in which the first
element (12,27) and the second element (13,28) are
arranged for rotation about mutually-inclined axes and
are maintained in their relative dispositions by the
engagement of a planar surface of the first element
(12,27) with a planar surface of the second element
(13,28), each surface being oblique to the axis of
respective element.

3.  A device as claimed in Claim 1 or 2, in which the
first element (42,52) and second element (43,53) are
arranged for rotation about mutually-inclined axes and
are maintained in their relative dispositions by the
engagement of an outer cylindrical surface of one
element (43,52) with an inner cylindrical surface of
the other element (42,53).

4.  A device as claimed in Claim 1, in which the first
and second elements are eccentrically mounted bushes (64,65) through which the mounted member (60) passes, the bushes (64,65) being rotatable relative to the base member (66) and to each other and further mounting means (61,62) are provided at the point of intersection of the axis of the mounted member (60) in a reference position and in a position inclined thereto.

5. A device as claimed in Claim 1, in which the first and second elements are each an element (72,73) having a circular cross-section and eccentrically mounted for rotation about a common axis (50) and the attitude defined by the elements (72,73) is imparted to the mounted member (74).

6. A device as claimed in any preceding Claim, in which the first element (27) and the second element (28) are arranged for symmetrical contra-rotation only relatively to the base member (24) and thereby alter the inclination of the mounted member (20) with respect thereto.

7. A device as claimed in Claim 6 and additionally comprising a further pair of first and second elements (27,28) as defined in Claim 8 and arranged to alter the inclination of the mounted member (20) in a direction perpendicular to the direction of inclination imparted by the first-mentioned pair of elements (27,28).

8. A device as claimed in Claim 6 or 7, in which the first and second elements are each a tapered washer (27,28) and additionally comprising a slidably mounted plate (29) interposed between the washers (27,28) and arranged for displacement by camming

- 3 -

action on rotation of one washer (27) and for that displacement to cause equal rotation in an opposite sense of the other washer (28).

9. A device as claimed in any one of Claims 1 to 5, in which the elements (12,13) are so arranged that rotation of the elements without relative rotation varies the orientation of the mounted member (10).

10. A device as claimed in any preceding Claim and further comprising locking means (15 and 26) for securing the mounted member (10,20) in a desired attitude relatively to the base member (11,24).

0016270

- 1/4 -

FIG. 1

FIG. 2

FIG. 3

FIG. 12

FIG. 13

FIG. 15

FIG.4

FIG.5

FIG.6

FIG.7

FIG.8

FIG.9

FIG.10

FIG.11

FIG.14

0016270

| Category | Citation of document with indication, where appropriate, of relevant passages | Relevant to claim |
|---|---|---|
| X | DE - U - 6 600 209 (HAGEDORN) <br> * claims 1 and 2; fig. 1 to 3 * | 1,5 |
| X | CH - A - 342 045 (CANADIAN PATENTS AND DEVELOPMENT LIMITED) <br> * page 3, lines 57 to 88; fig. 2 to 5 * | 1-3, 9 |
| X | US - A - 3 034 810 (GENERAL MOTORS CORPORATION) <br> * column 2, line 69 to column 3, line 22; fig. 2 and 3 * | 1,4, 5 |
|  | CH - A - 397 345 (E. KIRCHNER) <br> * page 2, lines 44 to 69; fig. 1 to 4 * | 1,2 |
| A | DE - B - 1 210 708 (FORSCHUNGS- UND ENTWICKLUNGSSTELLE FÜR SPORTMATERIAL) <br> * whole document * | |
| A | DE - U - 1 982 151 (STERNBERG) <br> * whole document * | |
| A | US - A - 3 204 898 (PRODUCT ENGINEERING COMP.) <br> * whole document * | |

**DOCUMENTS CONSIDERED TO BE RELEVANT**

**CLASSIFICATION OF THE APPLICATION (Int. Cl.3)**

F 16 C 11/10
B 63 H 16/06
F 16 B 9/00
F 16 C 23/10

**TECHNICAL FIELDS SEARCHED (Int.Cl.3)**

B 63 H 16/00
F 16 B 9/00
F 16 C 11/00
F 16 C 23/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 19 -10-1979 | MASSALSKI |

EPO Form 1503.1 06.78